Europäisches Patentamt

European Patent Office

Office européen des brevets

(11) Publication number: **0 088 629**
**B1**

# (12) EUROPEAN PATENT SPECIFICATION

(45) Date of publication of patent specification: **29.04.87**

(51) Int. Cl.⁴: **G 01 L 1/14, G 01 B 7/22**

(21) Application number: **83301244.6**

(22) Date of filing: **08.03.83**

(54) **Hermetically sealed strain gauges for measuring strains of high temperature parts.**

(30) Priority: **08.03.82 US 356054**

(43) Date of publication of application:
**14.09.83 Bulletin 83/37**

(45) Publication of the grant of the patent:
**29.04.87 Bulletin 87/18**

(84) Designated Contracting States:
**DE GB**

(56) References cited:
**FR-A-1 552 069**
**FR-A-2 459 462**
**GB-A-1 585 400**

(73) Proprietor: **THE BABCOCK & WILCOX COMPANY**
**1010 Common Street P.O. Box 60035**
**New Orleans Louisiana 70160 (US)**

(72) Inventor: **Nielsen, John Michael**
**13139 Meadow N.E.**
**Alliance Ohio 44601 (US)**

(74) Representative: **Cotter, Ivan John et al**
**D. YOUNG & CO. 10 Staple Inn**
**London WC1V 7RD (GB)**

## Description

This invention relates to strain gauges.

Recent advances in recorder electronics techniques make it possible to use capacitance measurement as a strain gauge measurement. An advantage of such a gauge is that it can be used in elevated temperatures whereas previously proposed devices are not suitable for use in extremely high temperatures, and in environments of water, steam or a similar vapour.

UK Patent Specification GB—A—1 585 400 discloses a strain gauge comprising an inner member, an outer member disposed over the inner member and having an inner wall spaced from an outer wall of the inner member, first and second spaced apart pairs of capacitor plates disposed between the inner member and the outer member and arranged at substantially diametrically opposite positions, and sensing means associated with the capacitor plates and responsive to movement of the capacitor plates to indicate stress.

According to the present invention there is provided a strain gauge comprising an inner member, an outer member disposed over the inner member and having an inner wall spaced from an outer wall of the inner member, first and second spaced apart pairs of capacitor plates disposed between the inner member and the outer member and arranged at substantially diametrically opposite positions, and sensing means associated with the capacitor plates and responsive to movement of the capacitor plates to indicate stress, characterised in that, in order to measure strains of high temperature parts, the strain gauge is hermetically sealed, the strain gauge comprising an attachment shim plate for fixing the strain gauge to a part whose strain is to be measured, the inner member having one end sealingly secured to the shim plate and the outer member having one end sealingly secured to the shim plate, and a cover sealingly secured to the opposite ends of the inner and outer members and closing the space between the inner and outer members.

Embodiments of the present invention described hereinbelow each comprise a hermetically sealed capacitance strain gauge wherein spaced apart capacitor plates are arranged in the space between the inner and outer members, which are sealed at each end. The plates are mounted on an attachment shim plate which may be affixed to a part or body to be measured. A change in the dimensions of the shim plate due to strain causes a corresponding movement of the capacitor plates and hence a change in capacitance, which may be used as a measure of the strain. The same arrangement may also be used with photoelectric devices for indicating a change in the plate positions and hence the strain which is produced. The inner and outer members may be in the form of concentric cylinders that are mounted on the attachment shim plate and sealed hermetically to the plate. The cylinders are spaced apart so that the space between them preferably accommodates pairs of capacitor plates arranged at diametrically opposite positions around the inner cylinder. The plates may be mounted so that an inner capacitive plate of each set is secured to the outer wall of the inner cylinder and the outer one of each set is secured to the inner wall of the outer cylinder, for example by a non-conductive adhesive. The cylinder members are sized and concentrically positioned relative to each other so that approximately parallel plate capacitors may be formed on opposite sides of the inner cylinder, that is at diametrically opposite locations. Proper concentric positioning of the cylinders may be maintained by seal welding the bottom end of each cylinder to the attachment shim plate. The opposite ends of the cylinder may be hermetically sealed by welding a cover plate ring having an inner opening concentrically positioned over the bore of the inner cylinder. Advantageously, however, the cover may be made to conform to the bore of the inner cylinder by providing a central part which projects through the cylinder and is secured to the shim plate, and a skirt which extends over the outer cylinder exterior wall.

The embodiments mentioned above provide an improved strain gauge which is operable at high temperatures and in a hostile environment such as liquid sodium or vapour conditions. The above-mentioned embodiments are simple in design, rugged in construction and economical to manufacture.

The inner and outer members (e.g. cylinders) arranged one over the other with a space therebetween may have a pair of capacitor plates arranged in spaced parallel relationship on respective opposite sides of the inner member, which may be a cylinder, and they may include a cover closing the opposite end of the space between the two cylinders. The attachment shim plate is as mentioned above employed for fixing the device to a part to be measured so that movements of the inner and outer members effected through strain induced in the attachment shim plate will register as a change in position of the capacitor plates or a change in the capacitance.

The invention will now be further described, by way of illustrative and non-limiting example, with reference to the accompanying drawings, in which:

Figure 1 is a top plan view of a strain gauge embodying the invention;

Figure 2 is an end elevational view of the strain gauge shown in Figure 1;

Figure 3 is a section taken along the line III—III of Figure 1;

Figure 4 is a section taken along the line IV—IV of Figure 3;

Figure 5 is an exploded perspective view of an alternative embodiment of the invention;

Figure 6 is a top plan view similar to Figure 1 of another embodiment of the invention;

Figure 7 is an end elevational view of the embodiment shown in Figure 6;

Figure 8 is a section taken along the line VIII—VIII of Figure 7; and·

Figure 9 is a section taken along the line IX—IX of Figure 6.

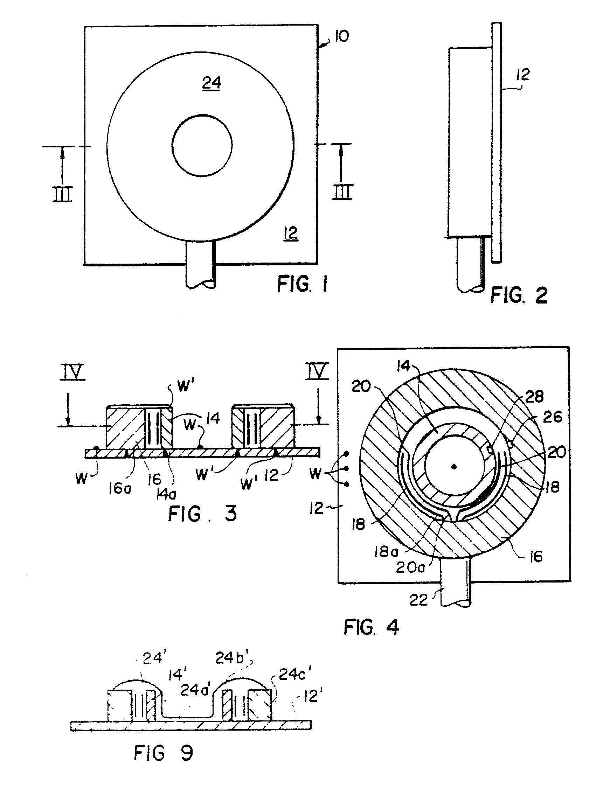

Figures 1 to 4 show a hermetically sealed high temperature strain gauge 10 for measuring strains of high temperature parts or parts disposed in a vapour atmosphere. The gauge 10 comprises an attachment shim plate 12 which is capable of being secured, for example, by spot welding attachments W, to a part whose strain is to be measured. A first inner cylinder member 14 has one end 14a which is secured to the attachment shim plate 12, for example by an electron beam seal weld W'. Similarly, an outer cylinder member 16 is arranged over the inner member 14 and has one end 16a which is sealingly secured to the shim plate 12 by electron beam seal welds W'.

In the embodiment shown in Figures 1 to 4, first and second sets of spaced apart capacitor plates 18 and 20 are arranged at substantially diametrically opposite positions around the inner cylinder 14 and are connected by electrically conductive lead wires 18a and 20a through a sheath lead wire 22 which extends through the outer cylinder 16. A ring-like cover plate 24 is disposed over the ends of the inner and outer cylinder members 14 and 16 which are opposite to the attachment shim plate 12 and is sealingly secured thereto, such as by seal welds W' which extend around the inner and outer periphery of the cover plate 24.

The sheath lead wire 22 contains electrical conductors which supply electrical energy and connect to means for sensing a change of capacitance caused by movement of the capacitor plates 18 and 20 when the part being measured is subject to strain. The sensing means, which is associated with the capacitor plates 18 and 20, may comprise suitable electrical instrumentation for sensing the various capacitance changes which occur during strain measurement and, for this purpose, the separate pairs of capacitors may be measured together in a half-bridge arrangement, or separately as desired. Figure 4 shows a variation of the sensing means, for sensing changes of the capacitor plate, that comprises photoelectric devices 26 and 28 located in the path of movement of the plates 18 and 20 for sensing plate variations.

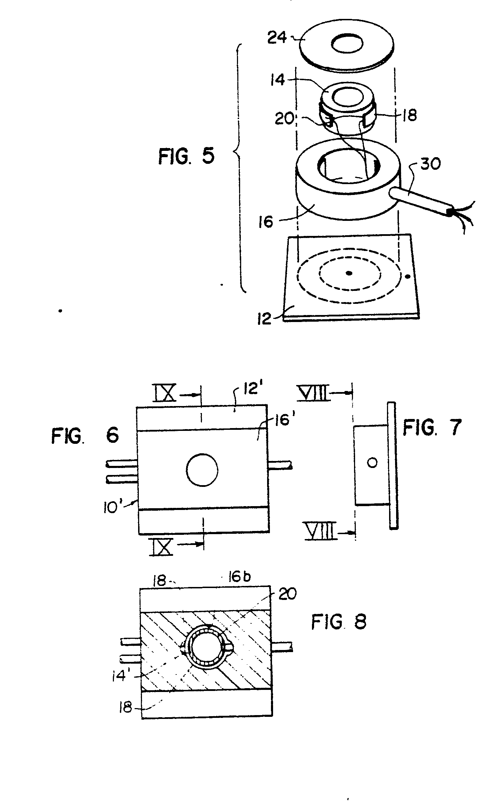

In an alternative embodiment shown in Figure 5, all of the parts are made and designated similarly to the embodiment described above, but the capacitor plates 18 and 20 are connected to the sensing means associated with the sheath lead wire 22 for indicating changes in capacitance during strain measurement.

In an embodiment shown in Figures 6 to 9, a strain gauge 10' includes an attachment shim plate 12' and an outer cylinder member 16' in the form of a rectangular block having a central bore 16b which defines an inner wall spaced outwardly from an inner cylinder member 14'. In this embodiment, capacitor plates 18 are affixed to the bore 16b of the outer member 16', and plates 20 affixed to the exterior wall of the inner member 14', a non-conductive adhesive being employed in both cases. As shown in Figure 9, a cover 24' comprises a central portion 24'a which overlies a central area of the shim plate 12' within the bore of the inner member 14', an intermediate part 24'b which extends over the outer ends of the inner and outer members 14', 16', and an outer part 24'c which may be conformed to the outer surface of the outer member 16'.and sealed thereto.

The inner member 14' is advantageously positioned concentrically within the outer member 16', and the small capacitor plates 18 and 20 are advantageously attached to the inner and outer members 14 and 16 at 180° spacing. This ensures that the plates 18 and 20 are substantially parallel. Once this concentric arrangement is made, and the inner and outer cylinder members 14', 16' secured to the attachment shim plate 12', the whole arrangement may be completely hermetically sealed by applying the cover 24'. A · gauge of this type has a sensitivity as good as known resistance gauges and it functions generally by movement of the inner cylinder member 14' relative to the outer cylinder member 16' during strain of the part to which the attachment plate 12 is spot welded. The amount of strain is advantageously determined with the gauge using a predetermined constant and by monitoring the capacitance change which is produced by movement of the inner cylinder member 14' relative to the outer cylinder member 16'.

A strain gauge embodying the present invention has been tested and it has been found that the gauge does not become affected by stray capacitance change because of its hermetic sealing. The construction also provides a very rugged gauge which will withstand atmospheric changes and rough use. The gauge is such that it can be used as a strain rosette or used to measure strain in three different directions.

**Claims**

1. A strain gauge comprising an inner member (14), an outer member (16) disposed over the inner member (14) and having an inner wall spaced from an outer wall of the inner member, first and second spaced apart pairs of capacitor plates (18, 20) disposed between the inner member (14) and the outer member (16) and arranged at substantially diametrically opposite positions, and sensing means associated with the capacitor plates (18, 20) and responsive to movement of the capacitor plates to indicate stress, characterised in that, in order to measure strains of high temperature parts, the strain gauge is hermetically sealed, the strain gauge comprising an attachment shim plate (12) for fixing the strain gauge to a part whose strain is to be measured, the inner member (14) having one end (14a) sealingly secured to the shim plate (12) and the outer member (16) having one end (16a) sealingly secured to the shim plate (12), and a cover (24) sealingly secured to the opposite ends of the inner and outer members (14, 16) and closing the space between the inner and outer members (14 and 16).

2. A strain gauge according to claim 1, including means for insulating the capacitor plates (18 to 20) from the inner and outer members (14, 16).

3. A strain gauge according to claim 1 or claim 2, including electron beam seal welds (W and W') established between the attachment shim plate (12) and each of the outer and inner members (14, 16), and between the cover (24) and the outer and inner members, and sealing the space between the outer and inner members at each end thereof.

4. A strain gauge according to claim 1, claim 2 or claim 3, wherein the sensing means associated with the capacitor plates (18, 20) comprises an electrical connection to the plates for sensing changes of capacitance thereof.

5. A strain gauge according to claim 4, wherein the sensing means comprises a sheath lead wire (22) extending through the outer member (16) and containing electrical conductors which are connected to the capacitor plates (18, 20).

6. A strain gauge according to claim 1, claim 2 or claim 3, wherein the sensing means for sensing the movement of the capacitor plates comprises a light sensitive means (26, 28) disposed in the path of movement of the plates.

7. A strain gauge according to any one of claims 1 to 6, wherein the cover (24) comprises a ring member having a central opening overlying a bore of the inner member (14), the inner and outer members (14, 16) comprising cylinders.

8. A strain gauge according to any one of claims 1 to 6, wherein the outer member comprises a rectangular block member (16') having a central cylindrical bore (16b) and the inner member (14') is concentrically arranged within the outer member.

9. A strain gauge according to any one of claims 1 to 6 and 8, wherein the cover (24') comprises a member having a central portion (24'a) disposed within a bore of the inner member (14') and an intermediate portion (24'b) extending over the inner member (14') to the outer member (16') and being connected at its outer periphery to the outer member.

**Patentansprüche**

1. Dehnungsmeßgerät mit einem inneren Teil (14), einem äußeren Teil (16), welches über dem inneren Teil (14) angeordnet ist und eine Innenwand hat, die im Abstand von einer Außenwand des inneren Teils angeordnet ist, wobei erste und zweite im Abstand angeordnete Paare von Kondensatorplatten (18, 20) zwischen dem inneren Teil (14) und dem äußeren Teil (16) und auf im wesentlichen diametral gegenüberliegenden Stellen angeordnet sind, und mit Meßfühlermitteln, welche den Kondensatorplatten (18, 20) zugeordnet sind und auf die Bewegung der Kondensatorplatten ansprechen, um eine Belastung anzuzeigen, dadurch gekennzeichnet, daß zur Messung von Beanspruchungen von auf hoher Temperatur befindlichen Teilen das Dehnungsmeßgerät hermetisch abgedichtet ist und eine Anbringungsbeilagenplatte (12) aufweist zum Befestigen des Dehnungsmeßgerätes an einem Teil, dessen Beanspruchung gemessen werden soll, wobei ein Ende (14a) des inneren Teils (14) in abgedichteter Weise an der Beilagenplatte (12) befestigt ist und ein Ende (16a) des äußeren Teils (16) in abdichtender Weise an der Beilagenplatte (12) angebracht ist und eine Abdeckung (24) abdichtend an den gegenüberliegenden Enden des inneren und äußeren Teils (14, 16) angebracht ist und den Raum zwischen dem inneren und äußeren Teil (14 und 16) verschließt.

2. Dehnungsmeßgerät nach Anspruch 1 mit Mitteln zum Isolieren der Kondensatorplatten (18 bis 20) gegen das innere und äußere Teil (14, 16).

3. Dehnungsmeßgerät nach Anspruch 1 oder Anspruch 2, mit Elektronenstrahlschweißstellen (W und W'), die zwischen der Anbringungsbeilagenplatte (12) und jedem der äußeren und inneren Teile (14, 16) und zwischen der Abdeckung (24) und dem äußeren und inneren Teil unter Abdichtung des Raumes zwischen dem äußeren und inneren Teil an jedem Ende dieser Teile gebildet sind.

4. Dehnungsmeßgerät nach Anspruch 1, Anspruch 2 oder Anspruch 3, wobei das Meßfühlmittel, welches den Kondensatorplatten (18, 20) zugeordnet ist, zum Abfühlen von Veränderungen der Plattenkapazität eine elektrische Verbindung zu den Platten aufweist.

5. Dehnungsmerßgerät nach Anspruch 4, wobei das Abfühlmittel eine Ummantelungsleitung (22) aufweist, welche sich durch das äußere Teil (16) erstreckt und elektrische Leiter enthält, die mit den Kondensatorplatten (18, 20) verbunden sind.

6. Dehnungsmeßgerät nach Anspruch 1, Anspruch 2 oder Anspruch 3, wobei das Meßfühlmittel zum Abfühlen der Bewegung der Kondensatorplatten ein auf Licht empfindliches Mittel (26, 28) aufweist, welches im Bewegungsweg der Platten angeordnet ist.

7. Dehnungsmeßgerät nach einem der Ansprüche 1 bis 6, wobei die Abdeckung (24) ein Ringteil mit einer Mittelöffnung aufweist, welche über einer Bohrung des Innenteils (14) liegt, wobei die inneren und äußeren Teile (14, 16) Zylinder aufweisen.

8. Dehnungsmeßgerät nach einem der Ansprüche 1 bis 6, wobei das äußere Teil ein rechteckiges Blockteil (16') aufweist mit einer mittigen zylindrischen Bohrung (16b) und das innere Teil (14') konzentrisch in dem äußeren Teil angeordnet ist.

9. Dehnungsmeßgerät nach einem der Ansprüche 1 bis 6 und 8, wobei die Abdeckung (24') ein Teil mit einer Mittelbohrung (24'a) aufweist, die in einer Bohrung des inneren Teils (14') angeordnet ist, und ein Zwischenteil (24'b) hat, welches sich über das innere Teil (14') zu dem äußeren Teil (16') erstreckt und an seinem Außenumfang mit dem äußeren Teil verbunden ist.

## Revendications

1. Jauge de contrainte comprenant un élément intérieur (14), un élément extérieur (16) disposé par-dessus l'élément intérieur (14) et comportant une paroi intérieure espacée d'une paroi extérieure de l'élément intérieur, de première et seconde paires espacées de plaques de condensateur (18, 20) placées entre l'élément intérieur (14) et l'élément extérieur (16) et disposées en des emplacements à peu près diamétralement opposés, et un moyen détecteur associé aux plaques de condensateur (18, 20) et sensible à une déplacement des plaques de condensateur pour indiquer une contrainte, caractérisée en ce que, en vue de mesurer des contraintes de pièces à haute température, la jauge de contrainte est hermétiquement fermée, la jauge de contrainte comprenant une plaque-cale de fixation (12) pour la fixation de la jauge de contrainte à une pièce dont la contrainte est à mesurer, l'élément intérieur (14) présentant une extrémité (14a) fixée de manière étanche à la plaque-cale (12) et l'élément extérieur (16) présentant une extrémité (16a) fixée de manière étanche à la plaque-cale (12), et un couvercle (24) fixé de manière étanche aux extrémités opposées des éléments intérieur et extérieur (14, 16) et fermant l'espace séparant les éléments intérieur et extérieur (14 et 16).

2. Jauge de contrainte selon la revendication 1, comportant des moyens pour isoler les plaques de condensateur (18 à 20) des éléments intérieur et extérieur (14, 16).

3. Jauge de contrainte selon la revendication 1 ou la revendication 2, comportant des soudures d'étanchéité (W et W') réalisées par bombardement électronique entre la plaque-cale de fixation (12) et chacun des éléments extérieur et intérieur (14, 16), et entre le couvercle (24) et les éléments extérieur et intérieur, et étanchant l'espace séparant les éléments extérieur et intérieur à chacune de ses extrémités.

4. Jauge de contrainte selon la revendication 1, la revendication 2, ou la revendication 3, dans lequel le moyen détecteur associé aux plaques de condensateur (18, 20) est une connexion électrique desservant les plaques pour en déceler les modifications de capacité.

5. Jauge de contrainte selon la revendication 4, dans laquelle le moyen détecteur est un câble en plomb à gaine (22) traversant l'élément extérieur (16) et contenant des conducteurs électriques qui sont reliés aux plaques de condensateur (18, 20).

6. Jauge de contrainte selon la revendication 1, la revendication 2 ou la revendication 3, dans laquelle le moyen détecteur destiné à détecter le déplacement des plaques de condensateur comprend des moyens photosensibles (26, 28) disposés sur le trajet de mouvement des plaques.

7. Jauge de contrainte selon l'une quelconque des revendications 1 à 6, dans laquelle le couvercle (24) est une pièce annulaire présentant une ouverture centrale superposée à un alésage de l'élément intérieur (14), les éléments intérieur et extérieur (14, 16) étant des cylindres.

8. Jauge de contrainte selon l'une quelconque des revendications 1 à 6, dans laquelle l'élément extérieur est un élément en bloc rectangulaire (16') présentant un alésage cylindrique central (16b) et l'élément intérieur (14') est disposé concentriquement à l'intérieur de l'élément extérieur.

9. Jauge de contrainte selon l'une quelconque des revendications 1 à 6 et 8, dans laquelle le couvercle (24') est une pièce présentant une partie centrale (24'a) disposée à l'intérieur d'un alésage de l'élément intérieur (14') et une partie intermédiaire (24'b) s'étendant au-dessus de l'élément intérieur (14') jusqu'à l'élément extérieur (16') et reliée par son pourtour extérieur à l'élément extérieur.

FIG. 1

FIG. 2

FIG. 3

FIG. 4

FIG 9

1

FIG. 5

24
14
20
18
30
16
12

FIG. 6

IX
12'
VIII
16'
10'
IX
VIII

FIG. 7

FIG. 8

18
16b
20
14'
18

2